# EUROPEAN PATENT SPECIFICATION

(11) **EP 0 931 008 B1**
(45) Date of publication and mention of the grant of the patent: **19.07.2000**
(21) Application number: 96935784.7
(22) Date of filing: 23.08.1996
(51) Int. Cl.: B65G 43/02

(54) **SMART SPLICE**
INTELLIGENTE SPLEISSVERBINDUNG
JONCTION INTELLIGENTE

(43) Date of publication of application: 28.07.1999
(73) Proprietor: THE GOODYEAR TIRE & RUBBER COMPANY, Akron, Ohio 44316-0001 (US)
(72) Inventor: HUTCHINS, Thomas, Goodsell, Uniontown, OH 44685 (US)
(74) Representative: Leitz, Paul
(86) International application number: US9613584
(87) International publication number: WO9807643

(56) References cited:
- DE-C- 4 444 262
- DE-C- 4 444 263
- DE-C- 19 525 326

## Description

### Technical Field

This invention pertains generally to the art of conveyor belt identification means and more specifically to the use of an embedded integrated circuit transponder which is interrogated to transmit belt identification and other data.

### Background Art

In the manufacture of conveyor belts it is desirable to provide unique identification for each belt. A currently used procedure molds an alphanumeric "brand" onto the belt surface. The brand normally identifies the belt type, the date of manufacture and the belt section. In addition, at times splices are needed to repair damaged segments of a conveyor belt. It is also convenient to brand the spliced segments so as to monitor the success of the repair effort. With prior art devices, the information contained on the brand is readable only while the belt is non-operative and relatively free from excess debris.

In the art it is known that monitoring the condition of an endless conveyor belt during usage can prevent irreparable belt damage and needless production delays. In US Patent No. 4,087,800 rip detection coils embedded within the layers of a conveyor belt is one tool used for such monitoring. For the most part, the embedded devices are passive antennae which serve as coupling devices when specific sections of the belt pass by a rip detection station. Generally, an electrical current is induced in an antenna, and if a sufficiently strong signal is received from the antenna, it is presumed that the integrity of the belt is maintained. An insufficiently transmitted signal, on the other hand, may indicate the presence of a longitudinal rip in the belt surface requiring immediate attention.

The present invention relates to an endless conveyor belt having an integrated circuit transponder embedded within the structure of the conveyor belt for use in belt or belt section identification. The transponder is a passive device which depends upon the receipt of an interrogation signal emanating from an outside source. The interrogation signal is rectified by the integrated circuit transponder, which then transmits an electrical signal digitally encoded to identify the belt or belt section. A unique "digital brand" can be used for each belt or belt section.

The present invention provides a non-contact means for identifying a conveyor belt, or belt section, and monitoring thereof which is simple and efficient while providing better and more advantageous results.

### Disclosure of Invention

According to the invention, an endless conveyor belt having an elastomeric body, a top cover, a pulley cover, and a reinforced layer disposed between and coextensive with the top cover and the pulley cover is provided as recited in claims 1-8.

According to another aspect of the invention, a method of locating a splice in a conveyor belt comprises the steps of:
embedding an integrated circuit transponder in the structure of the conveyor belt near the splice, the transponder being able to transmit an electrical signal in response to an oscillating electric or magnetic field emanating from a source in contact with or spaced from the belt;
interrogating the transponder with the oscillating electric or magnetic field; and,
receiving the transmitted electrical signal from the transponder.

One advantage of the present invention is the provision of non-contact means for identifying a conveyor belt or belt section.

Another advantage of the present invention is the provision of a quick and precise method of monitoring a repair in a conveyor belt.

### Brief Description of Drawings

The invention may take physical form in certain parts and arrangement of parts. A preferred embodiment of these parts will be discussed in detail in the specification and illustrated in the accompanying drawings, which form a part of this disclosure and wherein:

FIGURE 1 is a perspective view, partly in section, of a conveyor belt having an embedded integrated circuit transponder according to the invention.

FIGURE 2 is a perspective view of one embodiment of a transponder according to the invention.

FIGURE 3 is a perspective view of another embodiment of a transponder according to the invention.

FIGURE 4 is a transverse sectional view of a conveyor belt having a steel cable reinforced layer and two embedded transponders.

FIGURE 5 is a side view of a splice in a reinforced conveyor belt having embedded transponders according to the invention.

FIGURE 6 is transverse sectional view of a textile belt having embedded transponders.

FIGURE 7 is a side view of a splice in a textile belt having embedded transponders according to the invention.

### Detailed Description of the Invention

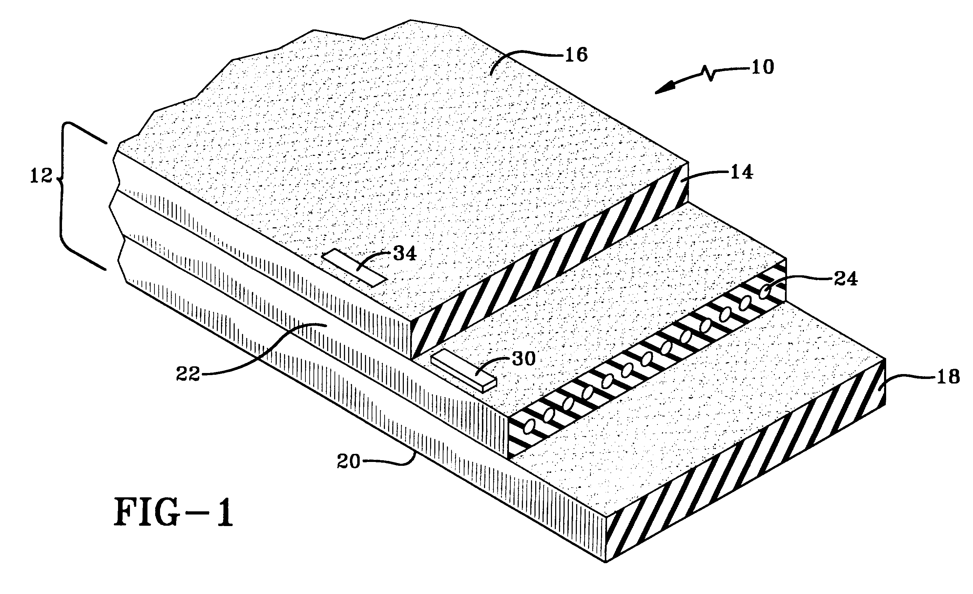

Figure 1 is directed to a conveyor belt 10 comprising an elastomeric body 12 having a top cover 14, which includes a load-carrying surface 16, and a parallel pulley cover 18, which has a pulley-engaging surface 20. The conveyor belt also has at least one reinforced layer 22 disposed within the elastomeric body 12.

In a preferred embodiment, the reinforced layer 22 includes steel cables 24, although the present invention may be practiced in many types of reinforced conveyor belts including those reinforced with fabric, such as nylon, rayon, cotton, polyester, aramid, and others.

In accordance with the invention, one or more integrated circuit transponders 30 are embedded within the structure of the conveyor belt 10. The need to protect the embedded transponders 30 from the severe conditions of the belt's working environment and while simultaneously providing convenient access to the transponder 30 will determine I the placement in a belt. One or more transponders 30 may be placed at predetermined positions along the length of the belt to indicate the presence of splices, rip detection coils, brand site and the like. In the art, it is usual to place a brand 34 on an edge of the conveyor belt 10. The brand 34 may be alphanumeric and normally contain information corresponding to the belt's manufacturing date, materials of construction used in the belt, equipment intended to be used with the belt, and the like. Figure 1 shows an embedded integrated circuit transponder 30 located in the top cover 14 near the brand 34. Such a transponder 30 may emit data relating to the brand 34 upon interrogation.

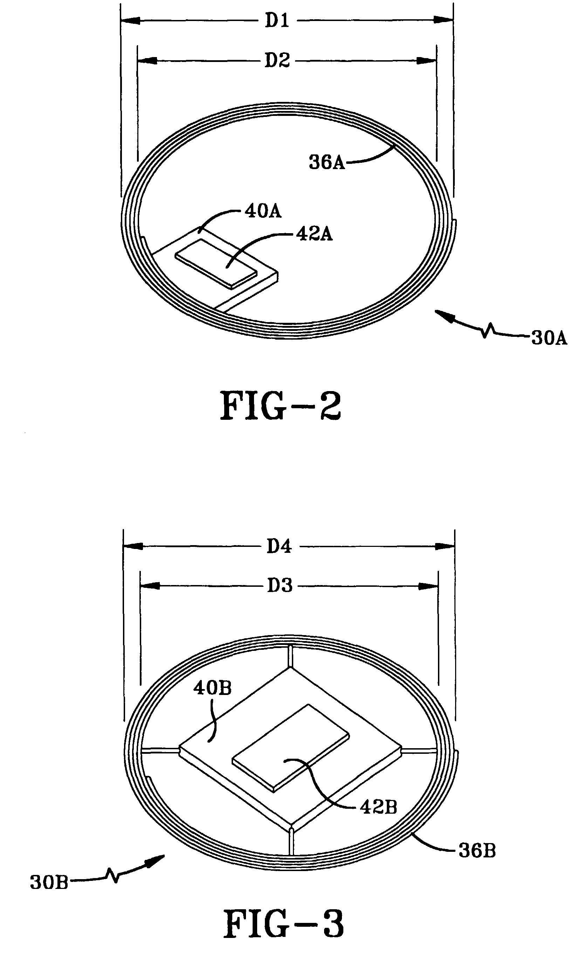

With particular reference to Figures 2 and 3, the detailed structure of the embedded transponder 30 will be described. A preferred embodiment of the invention, shown in Figure 2, utilizes a transponder 30A which is of a flat-ring style made of an electrical coil which is wound in a generally flat plane which serves as the antenna 36A. The number of windings of the transponder is a matter of engineering judgment depending on the application. The ring is preferably 1.5 mm to 2.0 mm thick and has an outer diameter D1 of between 45mm and 60mm and an inner diameter D2 of between 40mm and 55 mm. However, coil length, width, turns and other characteristics may be varied according to the particular requirements of each application. The transponder 30A is embedded in the belt structure in a plane generally parallel with the belt surfaces 16, 20.

Attached to this antenna 36A is a printed circuit board 40A. The RF-ID integrated circuit 42A, hereinafter IC, is mounted onto the circuit board 40A. The IC 42A and board 40A are encased in a rigid epoxy material, such as is available from the Dexter Hysol Corporation under the trade name "Dexter Hysol 4322", while the antenna 36A itself is coated with a soft polymeric material, such as solderable polyester to NEMA standard MW-77-C. The preferred IC board 40A is approximately 8 mm square. The preferred antenna is presently manufactured from coated wire.

Another embodiment of the invention, shown in Figure 3, utilizes a transponder 30B wherein both the IC board 40B and the antenna 36B are encapsulated with a rigid epoxy material, such as is available from the Dexter Hysol Corporation under the trade name "Dexter Hysol 4322." In this embodiment, the flat ring antenna 36B consists of an electrical coil wire wound in a flat plane having a thickness of from 1.5 mm to 2.0 mm with an outer diameter D3 of about 15 mm to 25 mm and an inner diameter D4 of about 8 mm to 18mm. The IC board 40B is located in the center of the ring.

Both embodiments of the transponder 30A, 30B herein described are adhered to the rubber of the belt covers 14, 18, or to the rubber covering the reinforcement. A suitable epoxy or other adhesive, such as an adhesive available from the Lord Corporation under the trade name Chemloc 205, is used to prevent any possibility of a static charge arising from the transponder 30 due to rubber movement.

The function of the transponder 30 is similar to that which is disclosed in U. S. Patent No. 5,181,975, the entire disclosure being incorporated herein by reference. An emitted RF signal is received by the transponder 30. The transponder 30 is powered by the signal and in turn emits a return RF signal which carries a data stream.

In one embodiment, the interrogation signal is provided via a hand held reader (not shown). The reader also acts as the receiver for the return RF signal. Alternately, the RF reader could be placed at some fixed location along a conveyor system. In a preferred embodiment, the input signal from the reader is at 125 KHz and the return signal is at 62.5 KHz.

Figure 4 shows a preferred embodiment of the invention utilizing a conveyor belt 10 having a steel cable-reinforced layer 22. Two transponders 30 are positioned within the belt 10. A first transponder 30C is located within the top cover 14 on the interface between the top cover 14 and the reinforced layer 22. A second transponder 30D is located on the interface between the pulley cover 18 and the reinforced layer 22. This configuration is advantageous because the first transponder 30C is protected from the load-carrying surface 16 and the second transponder 30D is protected from the pulley-engaging surface 20.

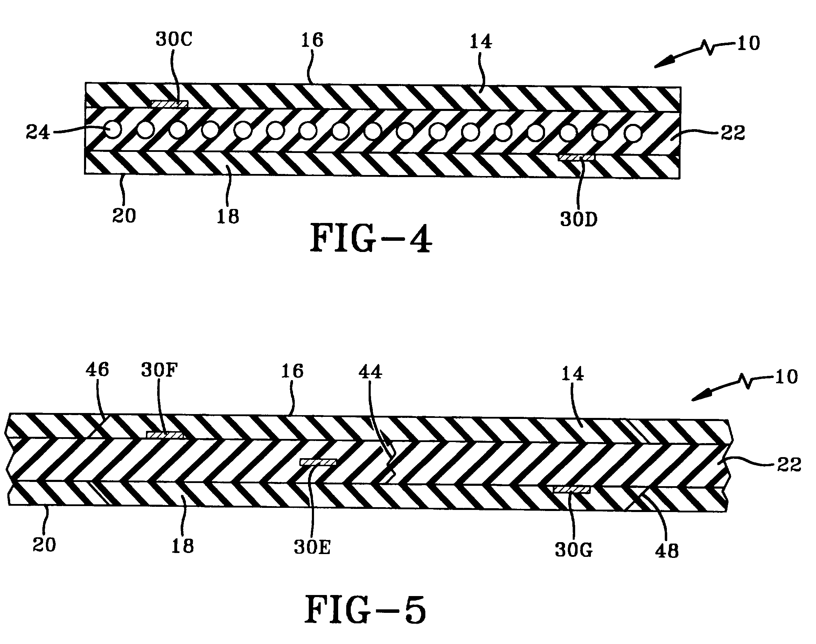

Figure 5 shows where the transponders 30 could be located in the event that the conveyor belt 10 contains a splice 44. A first transponder 30E is located in the reinforced layer 22 near a splice 44 therein. A second transponder 30F is embedded between the top cover 14 and the reinforced layer 22, near a splice 46 in the top cover 14. A third transponder 30G is located between the pulley cover 18 and the reinforced layer 22 near a splice 48 in the pulley cover 18. Upon interrogation, each of the transponders 30 is capable of emitting digitized data such as date of splice installation and type of material used in making the splice. By marking each splice 44, 46, 48, interrogation of the transponders 30 would provide immediate location and identification of the splice to permit monitoring of the repair. The transponders 30 are capable of being encoded with appropriate data such as date of installation, belt material utilized, and the like.

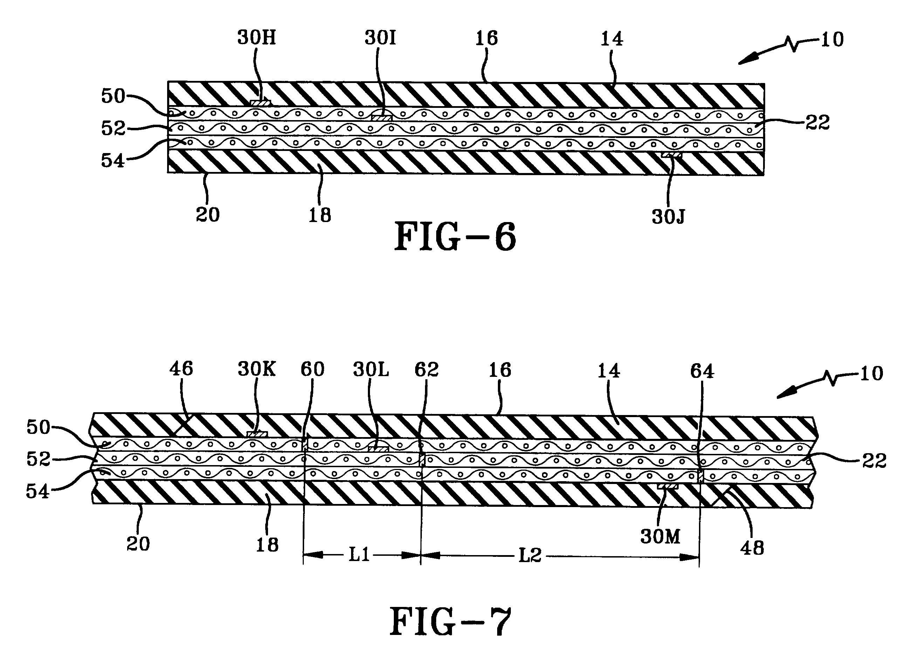

Figure 6 shows another preferred embodiment of the invention utilizing a conveyor belt 10 having a fabric-reinforced layer 22. In the figure, the conveyor belt 10 again comprises a top cover 14 and a pulley cover 18. The reinforced layer 22 consists of three fabric plies 50, 52, 54, although other configurations are possible. In a preferred embodiment, one transponder 30H is located between the top cover 14 and the uppermost fabric ply 50. A second transponder 30I is located between the uppermost ply 50 and the middle ply 52. Alternately, the second transponder 30I could be located between the middle ply 52 and the lowermost ply 54. A third transponder 30J is located between the lowermost ply 54 and the pulley cover 18. The widthwise placement of the transponders 30 H,I,J is variable depending on the needs of the application.

Figure 7 shows a preferred embodiment of the invention in a fabric-reinforced conveyor belt 10 which contains a splice. In a typical splice, the splices in each ply of the reinforced layer 22 are staggered along the length of the belt. For example, the splice 60 for the uppermost ply 50 is offset some length L1 from the splice 62 in the middle ply 52 which is itself offset some length L2 from the splice 64 in the lowermost ply 54. The splices 60,62,64 in the reinforced layer 22 are contained within segments of both the top cover 14 and pulley cover 18 which are spliced into the original belt. The positioning of transponders 30 within the spliced section will give precise locations for each of the splices 60, 62, 64 in the reinforced layer 22. A first transponder 30K is located between the top cover 14 and the uppermost ply 50 in close proximity to the splice 60 of the uppermost ply 50. A second transponder 30L is positioned between the uppermost ply 50 and the middle ply 52 (or between the middle ply 52 and the lowermost ply 54) in close proximity to the splice 62 of the middle ply 52. A third transponder 30M is positioned between the lowermost ply 54 and the pulley cover 18 in close proximity to the splice 64 in the lowermost ply 54. Again, the widthwise placement of the transponders 30 is variable.

The transponders 30 may be embedded in the belt structure during the belt manufacturing process, or added to a surface of a belt layer during a post-cure operation.

The present invention has been described with reference to the preferred embodiment. Obviously, modifications and alterations will occur to others upon a reading and understanding of the specification. It is intended by the applicant to include all such modifications and alterations insofar as they come within the scope of the appended claims or the equivalents thereof.

## Claims

1. An endless conveyor belt (10) having an elastomeric body (12), a top cover (14), a pulley cover (18), and a reinforced layer (22) disposed between and coextensive with the top cover and the pulley cover, a splice (46) in the top cover, a splice in the pulley cover (48) and a first splice (44) in the reinforced layer due to a splice in the belt; the belt being characterized by:
a first integrated circuit transponder (30E) being located in the reinforced layer in close proximity to the first splice for use in splice identification and monitoring, the first transponder being able to transmit an electrical signal in response to an oscillating electric or magnetic field emanating from a source in contact with or spaced from the belt.

2. The conveyor belt of claim 1 further characterized by:
a second integrated circuit transponder (30F), the second transponder being located between the top cover and the reinforced layer in close proximity to the splice in the top cover.

3. The conveyor belt of claim 2 further characterized by:
a third integrated circuit transponder (30G), the third transponder being located between the pulley cover and the reinforced layer in close proximity to the splice in the pulley cover.

4. The conveyor belt of claim 1 wherein the first transponder comprises:
an antenna (36A) comprising an electrical coil having a plurality of bunched turns, the coil being substantially planar, the plane of the coil being substantially parallel with the belt surfaces; and,
a printed circuit board (40A) attached to the coil, the integrated circuit of the first transponder being mounted on the circuit board.

5. The conveyor belt of claim 4 wherein the antenna further comprises:
a circular shape having an inner diameter between 40mm to 55mm, and an outer diameter between 45mm to 60mm.

6. The conveyor belt of claim 2 wherein the first and second transponders each comprise:
an antenna (36A) comprising an electrical coil having a plurality of bunched turns, the coil being substantially planar, the plane of the coil being substantially parallel with the belt surfaces; and,
a printed circuit board (40A) attached to the coil, the integrated circuit of each transponder being mounted on the circuit board.

7. The conveyor belt of claim 4 wherein the antenna is encased in soft polymeric material and the integrated circuit board is encased in a rigid epoxy material.

8. The conveyor belt of claim 4 wherein the antenna and integrated circuit board are encased in rigid epoxy material.

9. A method of locating a splice (44) in a conveyor belt, the method characterized by the steps of:
embedding an integrated circuit transponder (30A) in the structure of the conveyor belt near the splice, the transponder being able to transmit an electrical signal in response to an oscillating electric or magnetic field emanating from a source in contact with or spaced from the belt;
interrogating the transponder with the oscillating electric or magnetic field; and, receiving the transmitted electrical signal from the transponder.

## Patentansprüche

1. Endlosförderband (10) mit einem elastomeren Körper (12), einem Decküberzug (14), einem Rollenüberzug (18), und einer verstärkten Schicht (22), die zwischen dem Decküberzug und dem Rollenüberzug angeordnet ist und sich gemeinsam mit diesen erstreckt, einem Spleiß (46) in dem Decküberzug, einem Spleiß in dem Rollenüberzug (48) und einem ersten Spleiß (44) in der verstärkten Schicht, aufgrund eines Spleißes in dem Band, wobei das Band gekennzeichnet ist durch:
einen ersten, als integrierte Schaltung ausgebildeten Transponder (30E), der in der verstärkten Schicht in enger Nähe zu dem ersten Spleiß angeordnet ist, zur Verwendung bei der Kennzeichnung und Überwachung eines Spleißes, wobei der erste Transponder in der Lage ist, in Ansprechen auf ein oszillierendes elektrisches oder magnetisches Feld, das von einer Quelle ausgeht, die in Kontakt mit dem Band steht oder von diesem beabstandet ist, ein elektrisches Signal auszusenden.

2. Förderband nach Anspruch 1, ferner gekennzeichnet durch:
einen zweiten, als integrierte Schaltung ausgebildeten Transponder (30F), wobei der zweite Transponder zwischen dem Decküberzug und der verstärkten Schicht in enger Nähe zu dem Spleiß in dem Decküberzug angeordnet ist.

3. Förderband nach Anspruch 2, ferner gekennzeichnet durch:
einen dritten, als integrierte Schaltung ausgebildeten Transponder (30G), wobei der dritte Transponder zwischen dem Rollenüberzug und der verstärkten Schicht in enger Nähe zu dem Spleiß in dem Rollenüberzug angeordnet ist.

4. Förderband nach Anspruch 1, wobei der erste Transponder umfaßt:
eine Antenne (36A), die eine elektrische Spule mit einer Vielzahl von gebündelten Windungen aufweist, wobei die Spule im wesentlichen eben ist und die Ebene der Spule im wesentlichen parallel zu den Bandoberflächen liegt, und
eine Leiterplatte (40A), die an der Spule angebracht ist, wobei die integrierte Schaltung des ersten Transponders auf der Leiterplatte montiert ist.

5. Förderband nach Anspruch 4, wobei die Antenne ferner umfaßt:
eine kreisförmige Gestalt mit einem Innendurchmesser zwischen 40 mm und 55 mm und einem Außendurchmesser zwischen 45 mm und 60 mm.

6. Förderband nach Anspruch 2, wobei der erste und der zweite Transponder jeweils umfassen:
eine Antenne (36A), die eine elektrische Spule mit einer Vielzahl von gebündelten Windungen aufweist, wobei die Spule im wesentlichen eben ist und die Ebene der Spule im wesentlichen parallel zu den Bandoberflächen liegt, und
eine Leiterplatte (40A), die an der Spule angebracht ist, wobei die integrierte Schaltung jedes Transponders auf der Leiterplatte montiert ist.

7. Förderband nach Anspruch 4, wobei die Antenne in einem weichen Polymermaterial eingeschlossen ist und die Leiterplatte mit der integrierten Schaltung in einem steifen Epoxidmaterial eingeschlossen ist.

8. Förderband nach Anspruch 4, wobei die Antenne und die Leiterplatte mit der integrierten Schaltung in steifem Epoxidmaterial eingeschlossen sind.

9. Verfahren zum Lokalisieren eines Spleißes (44) in einem Förderband, wobei das Verfahren durch die Schritte gekennzeichnet ist, daß:
ein als integrierte Schaltung ausgebildeter Transponder (30A) in den Aufbau des Förderbandes in der Nähe des Spleißes eingebettet wird, wobei der Transponder in der Lage ist, in Ansprechen auf ein oszillierendes elektrisches oder magnetisches Feld, das von einer Quelle ausgeht, die mit dem Band in Kontakt steht oder von diesem beabstandet ist, ein elektrisches Signal auszusenden,
der Transponder mit dem oszillierenden elektrischen oder magnetischen Feld abgefragt wird, und
das von dem Transponder ausgesendete elektrische Signal empfangen wird.

## Revendications

1. Courroie transporteuse sans fin (10) possédant un corps élastomère (12), un recouvrement supérieur (14), un recouvrement (18) côté poulie et une couche renforcée (22) disposée entre le recouvrement supérieur et le recouvrement côté poulie et de même étendue que ces derniers, un joint (46) dans le recouvrement supérieur, un joint (48) dans le recouvrement (18) côté poulie et un premier joint (44) dans la couche renforcée dû à un joint dans la courroie; la courroie étant caractérisée par:
un premier répondeur à circuit intégré (30E) situé dans la couche renforcée à proximité étroite du premier joint à utiliser dans l'identification et dans la surveillance du joint, le premier répondeur étant à même de transmettre un signal électrique en réponse à un champ magnétique ou électrique oscillant émanant d'une source en contact avec la courroie ou espacée de cette dernière.

2. Courroie transporteuse selon la revendication 1, caractérisée en outre par:
un deuxième répondeur à circuit intégré (30F), le second répondeur étant disposé entre le recouvrement supérieur et la couche renforcée à proximité étroite du joint dans le recouvrement supérieur.

3. Courroie transporteuse selon la revendication 2, caractérisée en outre par:
un troisième répondeur à circuit intégré (30G), le troisième répondeur étant situé entre le recouvrement côté poulie et la couche renforcée à proximité étroite du joint dans le recouvrement côté poulie.

4. Courroie transporteuse selon la revendication 1, dans lequel le premier répondeur comprend:
une antenne (36A) comprenant une bobine électrique possédant plusieurs spires groupées, la bobine étant essentiellement plane, le plan de la bobine étant essentiellement parallèle aux surfaces de la courroie; et
une plaquette à circuits imprimés (40A) fixée à la bobine, le circuit intégré du premier répondeur étant monté sur la plaquette à circuits imprimés.

5. Courroie transporteuse selon la revendication 4, dans laquelle l'antenne comprend en outre:
une forme circulaire possédant un diamètre interne entre 40 mm et 55 mm et un diamètre externe entre 45 mm et 60 mm.

6. Courroie transporteuse selon la revendication 2, dans laquelle les premier et deuxième répondeurs comprennent chacun:
une antenne (36A) comprenant une bobine électrique possédant plusieurs spires groupées, la bobine étant essentiellement plane, le plan de la bobine étant essentiellement parallèle aux surfaces de la courroie; et
une plaquette à circuits imprimés (40A) fixée à la bobine, le circuit intégré du premier répondeur étant monté sur la plaquette à circuits imprimés.

7. Courroie transporteuse selon la revendication 4, dans laquelle l'antenne est encastrée dans une matière polymère tendre et la plaquette à circuit intégré est encastrée dans une matière époxy rigide.

8. Courroie transporteuse selon la revendication 4, dans laquelle l'antenne et la plaquette à circuit intégré sont encastrées dans une matière époxy rigide.

9. Procédé de repérage d'un joint (44) dans une courroie transporteuse, le procédé étant caractérisé par les étapes consistant à:
encastrer un répondeur à circuit intégré (30A) dans la structure de la courroie transporteuse à proximité du joint, le répondeur étant à même de transmettre un signal électrique en réponse à un champ magnétique ou électrique oscillant émanant d'une source en contact avec la courroie ou espacée de cette dernière;
interroger le répondeur avec le champ magnétique ou électrique oscillant; et
recevoir le signal électrique transmis par le répondeur.
